(19) Europäisches Patentamt
European Patent Office
Office européen des brevets

(11) **EP 2 800 057 B1**

(12) **EUROPEAN PATENT SPECIFICATION**

(45) Date of publication and mention
of the grant of the patent:
**20.09.2017 Bulletin 2017/38**

(51) Int Cl.:
*G06T 7/60* *(2017.01)*       *G06K 9/62* *(2006.01)*
*H04N 7/18* *(2006.01)*       *G06T 7/20* *(2017.01)*

(21) Application number: **14158725.3**

(22) Date of filing: **11.03.2014**

(54) **Mobile determination of properties of a trajectory of a ball**

Mobile Ermittlung von Flugbahneigenschaften eines Balls

Détermination mobile de propriétés d'une trajectoire d'une balle

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.04.2013 DE 102013205861**

(43) Date of publication of application:
**05.11.2014 Bulletin 2014/45**

(73) Proprietor: **Adidas AG**
**91074 Herzogenaurach (DE)**

(72) Inventors:
• **Kirk, Robert Frank**
  **91074 Herzogenaurach (DE)**
• **Kelley, John**
  **Sheffield, S26 5RF (GB)**
• **Driscoll, Heather Frances**
  **Bamford, Derbyshire, S33 0BY (GB)**
• **Hickey, Lee**
  **Sheffield, S10 5DW (GB)**

(74) Representative: **Wegner, Hans**
**Bardehle Pagenberg Partnerschaft mbB**
**Patentanwälte, Rechtsanwälte**
**Prinzregentenplatz 7**
**81675 München (DE)**

(56) References cited:
**US-A1- 2007 026 975**

• **Anonymous: "Video Physics for iOS", Vernier
Software & Technology , 23 November 2012
(2012-11-23), XP002724435, Retrieved from the
Internet:
URL:https://web.archive.org/web/2012112302
5736/http://www.vernier.com/products/softw
are/video-physics [retrieved on 2014-05-16]**
• **Bodhisattwa Chakraborty ET AL: "2D
Trajectory-based Position Estimation and
Tracking of the Ball in a Basketball Video", , 1
December 2011 (2011-12-01), XP055118359,
Retrieved from the Internet:
URL:http://dspace.nitrkl.ac.in/dspace/bits
tream/2080/1569/1/2D_Trajectory-Based.pdf
[retrieved on 2014-05-16]**
• **Anonymous: "LoliTrack Video Tracking Software
Operation Manual TABLE OF CONTENTS
INTRODUCTION TO THE VIDEO TRACKING
SOFTWARE", , 6 August 2007 (2007-08-06),
XP055307780, Retrieved from the Internet:
URL:http://www.loligosystems.com/upload/fi
les/LoliTrack_manual.pdf [retrieved on
2016-10-05]**
• **YANG J ET AL: "A REAL-TIME FACE TRACKER",
PROCEEDINGS OF THE IEEE WORKSHOP ON
APPLICATIONS OF COMPUTERVISION, XX, XX,
2 December 1996 (1996-12-02), pages 142-147,
XP000199692, DOI: 10.1109/ACV.1996.572043**

## Description

## 1. Technical field

The present invention relates to a method of measuring a property of a trajectory of a ball with a mobile computer device.

## 2. Prior art

Mobile computer devices such as smartphones, tablet computers and mobile media players, for example, share a growing popularity among users in recent years. The share of smartphones in the total market for mobile telephones has steadily increased, especially since the introduction of the "iPhone" ® by Apple Inc., Cupertino, USA. With the "iPad", a tablet computer, a new device class of mobile computer devices was successfully established. In addition, there are mobile media players, such as the "iPod" for example, which are able to play audio and video data, have a significant computing power and are also mobile computing devices.

A smartphone is a mobile telephone which, besides telephone functionality, provides for additional functionality, such as calendar, email and internet browser. Therefore, the type of connection in the mobile telephone network is not restricted to pure speech connections as with conventional mobile telephones. Rather, an additional data connection is provided to offer the user services such as email, internet browser and social media such as Twitter ® and Facebook ®.

A tablet computer is a mobile computer, which usually does not comprise a keyboard, but rather a touch-sensitive display enabling operation of the device. Compared to laptop computers, a tablet computer is usually lighter and smaller, such that it is easier to carry.

A mobile media player is able to play audio and video content. The audio content may for example have MP3, ACC or WAV format, while the video content may have MPEG, AVI or MOV format. The functionality of mobile media players may be extended by installing application programs, which are also referred to as "apps".

The resources of mobile computer devices are usually restricted compared to desktop computers or laptops. In particular, the processor performance is reduced to save energy stored in the battery and to provide for a sufficient operating time. For reasons of cost reduction, mobile computer devices are usually equipped with less memory than desktop or laptop computers.

Often mobile computer devices comprise hardware components that go beyond the usual hardware found in mobile telephones for example. This includes, for example, a camera which can take photos and video sequences, acceleration sensors and magnetic field sensors, NFC (Near Field Communication), Bluetooth and WLAN.

As with desktop computers, the basic functionality of mobile computer devices, which controls the hardware and schedules resources for example, is provided by an operating system. This is often adapted to the hardware to achieve an optimal utilization of the restricted hardware resources. Known operating systems are "iOS" ® by Apple and "Android" ® by Google Inc., Mountain View, California, USA.

The functionality of mobile computer devices can usually be extended by downloading computer programs. Such computer programs are also referred to as "apps" in the context of mobile computer devices and provide travel guides, weather forecasts or games for example. Usually apps are downloaded from a virtual market place on the Internet. Examples of such market places are "iTunes" ® by Apple and "Google Play" ® by Google.

The present invention relates to ball games such as soccer, tennis, table tennis or golf for example. In the hobby or amateur field, there is a need to measure a property of a trajectory of a ball that is kicked, batted or thrown, for example a soccer, tennis or golf ball, and to do so as simply and cost-effectively as possible. The property of the trajectory of the ball may, for example, be its speed or acceleration when kicked, thrown or batted or its flight distance. For example, hobby soccer players want to determine which player has the "hardest" kick, i.e. who can accelerate the ball to the highest speed.

In the hobby and amateur field, systems are known, for example, for measuring the speed of a ball, which are based on radar. These systems are arranged in the trajectory of a ball and measure the speed based on the radiation reflected by the ball, similarly to speed measurements of vehicles in traffic.

In the professional field, for example during TV transmissions of soccer games, systems are known, which optically determine the position of the players and the ball on a playing field. To this end, several stationary cameras are positioned at a certain distance from each other, such that each camera captures the playing field from a different viewing angle. The video frames captured by the cameras are analyzed by a computer with complicated software to determine the position of the players and of the ball. An example of such a professional system is the system "VIS.TRACK" by Cairos AG, Karlsbad, Germany.

The disadvantage of such systems is that, on the one hand, these systems must be carried to the sports venue in addition to other equipment and must be set up and, on the other hand, such systems are expensive.

XP002724435 ("Video Physics for iOS") is directed to physics video analysis on the iPhone, iPod touch and iPad. A video of an object in motion is taken, its position is marked frame by frame, and the scale is set up using a known distance. An object of known size in the plane of motion is required to scale the video to physical units such as meters or feet. Trajectory, position and velocity graphs for the object are drawn.

It is therefore the objective of the present invention to provide for a method with which a property of a trajectory of a ball can be measured in a simple and cost-effective way.

### 3. Summary of the invention

One aspect of the present invention relates to a method for determining a property of the trajectory of a ball with a mobile computer device, comprising the steps: (a) Capturing a sequence of video frames of the ball with a camera of the mobile computer device, wherein the central axis of the field of vision of the camera is at an angle of 80° to 100° to the expected trajectory of the ball; (b) Determining by the mobile computer device a first picture coordinate of the ball in a first video frame of the sequence; (c) Determining by the mobile computer device a second picture coordinate of the ball in a second video frame of the sequence; (d) Computing a property of the trajectory of the ball based on a difference between the first and second picture coordinates, a time difference between the first and second video picture and a reference quantity, which is determined based on the form and/or dimension of the ball in a separate photo taken with the camera, wherein the photo has a higher resolution than the first and second video frames, wherein the method further comprises the steps of: (e) Obtaining an indication of a user relating to the position of the ball in a video frame of the sequence of video frames; (f) Using the indication to determine by the mobile computer device the position of the ball in the video frame. The method is performed on a mobile computer device as described above. Mobile computer devices such as smartphones, tablet computers and mobile media players, for example, are small and mobile and are taken by their owners almost everywhere. Thus, usually a mobile computer device is available at the sports venue where the measurement of the property of the trajectory is to be performed (e.g. a soccer ground, a stadium, a grass field, a beach, a square, etc.). An additional device that must be carried and set up can therefore be dispensed with and the property of the trajectory of the ball may be determined virtually anywhere.

The method steps can, for example, be performed with an app which can be purchased simply and at a reasonable cost via a virtual market place. Alternatively, the mobile computer device is equipped with the claimed functionality on delivery.

The method uses the camera of the mobile computer device to take a sequence of video frames of a soccer ball being kicked, for example. Use with other ball sports, such as tennis, golf, table tennis, American football, basketball, etc., is also conceivable. Instead of kicking a ball, it may also be batted, as for example with tennis, or thrown, as for example with basketball.

The sequence of video frames is preferably directly recorded with the app which performs the claimed method steps. It is also conceivable that the sequence be recorded with the default video function of the mobile computer device, stored in the memory of the mobile computer device and subsequently provided to an app for analysis, by having the app access the stored sequence.

The first and second picture coordinates in a first and second video frame of the sequence are preferably determined by means of an edge detection method, which detects color and/or intensity gradients in a video frame or picture. Other methods, for example based on artificial neuronal networks, are conceivable. The picture coordinates preferably relate to the center of the ball in the video frames. It is also conceivable that the picture coordinates relate for example to a corner of a square or rectangle in which the ball just fits, i.e. the edges of which lay on a tangent of the ball in the video frame.

The difference between the picture coordinates of the ball is preferably the difference between the picture coordinates in the first and the second video frame. The picture coordinates are preferably pixel coordinates in two mutually perpendicular dimensions, for example x- and y-coordinates. The x-coordinate of the ball in the first frame is preferably subtracted from the x-coordinate of the ball in the second frame, or vice versa. The y-coordinate of the ball in the first frame is preferably subtracted from the y-coordinate of the ball in the second frame, or vice versa. The resulting difference between the x-coordinates and the resulting difference between the y-coordinates is preferably squared, the results are added and the square root is taken to calculate the distance, for example. The square root is preferably taken of the sum to obtain, for example, the absolute value of the distance moved by the ball between the first and second video frame in pixels.

The time difference between the first and second video frame is preferably determined from the indication of the frame rate of the camera of the mobile computer device. The time difference between two consecutive video frames of the video sequence in seconds preferably corresponds to the reciprocal value of the frame rate expressed in frames per second. The number of frames between the first and second video frame in the sequence of video frames is preferably considered.

The determined distance between the first and second frame in pixels is preferably divided by the time difference between the first and second video frame to obtain the speed of the ball in pixels per time unit, for example pixels per second.

The property of the trajectory of the ball is preferably speed, acceleration, an angle, or a flight distance. The speed may, for example, be the speed of the ball shortly after the ball is batted or kicked. The acceleration may be acceleration achieved by kicking, throwing or batting the ball. The angle may be the batting, throwing or kicking angle. The flight distance may be the distance between the point where the ball is batted and the point where the ball hits the ground. The mentioned properties of the trajectory of the ball are of interest for hobby and occasional sportsmen, for example, as well as for professional athletes and trainers to compare their performances.

The first and second video frames are preferably immediately consecutive frames in the sequence of video frames. Thus, the property of the trajectory of the ball may be determined from immediately consecutive video frames. For example, the speed of the ball may be determined from frame to frame to obtain a sequence of speeds.

The steps (b), (c) and (d) are preferably performed for a plurality of video frames of the sequence of video frames. Thus, either a sequence of the property of the trajectory of the ball or, for example, an average value may be determined from the sequence of consecutive video frames.

The property of the trajectory of the ball is preferably calculated based on the method of least squares. This method allows a very precise average value to be calculated. For example, the speed may be determined from consecutive video frames and an estimate of the mean speed may be obtained by means of the method of least squares. Alternatively the speed could be determined by fitting a line to the x-coordinates and y-coordinates of the ball in consecutive video frames as a function of time using the method of least squares. Subsequently the absolute value of the speed is determined by taking the square root of the sum of the squared slopes of both lines.

The method uses a reference quantity to calculate the desired property of the trajectory of the ball. The reference quantity preferably has the unit of meter per pixel.

The reference quantity is preferably based on the form and/or dimension of the ball in a picture taken with the camera of the mobile computer device. The form of the ball used as the reference quantity is preferably the curvature of the ball. The dimension of the ball is preferably the diameter of the ball. Other quantities are conceivable. The reference quantity is preferably calculated from a dimension, for example the diameter, of the ball in pixels as determined from the picture and a known dimension, for example the actual diameter of the ball in reality. The reference quantity is preferably a ratio of a dimension determined from the picture and the actual dimension in reality.

The picture taken with the camera is a photo created by the photo function of the camera. It is preferably a picture in which the ball is not moving, preferably before the ball is kicked, batted or thrown.

The steps described for calculating a property of the trajectory of the ball may also be performed in another order. For example, a pixel may be translated into meter or centimeter by means of the reference quantity, before the property of the trajectory is calculated.

In a preferred embodiment of the method, the reference quantity is calculated based on a known form and/or dimension of the ball. For example, a dimension of the ball in the picture is related to an actual dimension of the ball in reality. The property of the trajectory, e.g. the speed, in reality can thereby be calculated, for example in meter per second or kilometer per hour.

The known form and/or dimensions are preferably transferred to the method as an input value. For example, the actual form and/or dimension of the ball can be stored in an app performing the claimed method steps. Alternatively, the user may input the form and/or dimension of the ball. It is also conceivable that the user may select from a list of sports and that each sport be assigned the form and/or dimension of the ball corresponding to the sport. Correspondingly, the user may, for example, be presented with a selection of different balls and/or its corresponding diameters from which he may select. In an alternative embodiment of the invention, the form and/or dimension of the ball corresponding to the sport is stored on a server, e.g. as a list, and is only downloaded onto the mobile computer device if needed.

The form and/or dimensions of the ball are preferably a diameter, radius, circumference, an arc length, a distance or a curvature of the ball itself or a pattern thereon. For example, the circumference of the ball can be determined from the picture and may be related to the actual circumference of the ball. Alternatively, a pattern of a known form and/or dimension on the ball may be used for determining the reference quantity. The separate photo taken with the camera is a photo taken with the camera. With mobile computer devices, individual photos usually have a higher resolution than video frames from video sequences. Therefore, the reference quantity can be determined more precisely with a photo than with a video frame.

The method preferably further comprises the step of: determining a partial sequence of video frames in the sequence of video frames which show the ball in motion and selecting at least the second video frame from the partial sequence. Therefore, the ball is in motion at least in the second picture and its speed can be determined from the difference between its picture coordinates from the first video frame. The ball may also be in motion in the first picture. Alternatively, the ball may still be in the first video frame. This is preferably chronologically the last video frame of the sequence in which the ball is still.

The property of the trajectory of the ball is preferably determined from more than one video frame of the partial sequence. In this manner, the property of the trajectory of the ball can be determined as an average value of several video frames, which increases measuring accuracy. The difference between the picture coordinates is preferably determined in several pictures of the partial sequence in relation to a single earlier first video frame, but it is also conceivable that the difference be determined in relation to the respective immediately preceding video frame.

The first video frame of the partial sequence is preferably determined by means of a binary search algorithm. In a binary search algorithm, it is first determined for a video frame from the middle of the sequence whether the ball is in motion. If this is the case, a video frame from the middle of the first half of the sequence is selected and another determination made. If this is not the case, a video frame from the middle of the latter half of the sequence is selected and another determination made. In this manner, the beginning of the partial sequence is found in a maximum of $\lceil \log_2(n) \rceil$ steps, n being the number of video frames in the sequence and the function rounding $\lceil . \rceil$ up to the next integer. In view of the limited processing power of a mobile computer device, the method is accelerated in this way.

In a preferred embodiment, the method comprises the step of: extrapolating the picture coordinates of the ball in at least one of the video frames of the sequence of video frames. With this step, the location of the ball in the subsequent video frames is extrapolated. This estimation can be used for further method steps in order to accelerate the method.

The method preferably comprises the step of: determining the first and second picture coordinates of the ball in the first and the second video frame of the sequence in the steps (b) and (c) based on the extrapolated picture coordinates. For example, the ball may be searched on the basis of extrapolated picture coordinates in the first and the second video frame. This avoids having to search the entire pictures for a ball, which accelerates the method. Searching for a certain object in a picture is rather CPU-intensive because the entire picture data have to be searched to find the contour of the object. Furthermore, the dimension of the object in the picture is usually unknown, because this depends, among other things, on the distance between the camera and the object. Thus, the search algorithm would have to search the picture with different possible sizes of the object.

The method preferably further comprises the step of: estimating the number of video frames of the partial sequence based on the extrapolated picture coordinates. In this manner, the number of video frames can be limited in which the ball has to be searched for, in the first place, which accelerates the method, especially in view of the limited resources of a mobile computer device. The method further comprises the steps of: obtaining a user's indication relating to the position of the ball in a video frame of the sequence of video frames and using the indication to determine the position of the ball in the video frame. It is advantageous for the indication of the user to be taken as a basis for the search for the ball in the video frames so that it is not necessary to search an entire picture for the ball in each case. Moreover, the ball may thus be differentiated from other round objects that would erroneously also be identified as a ball. The user preferably taps the place on a touch-sensitive screen of the mobile computer device in which the ball is shown in the video frame. Alternatively, the user selects the position by means of a cursor shown on the screen.

A predetermined number of chronologically first video frames of the sequence of video frames are preferably not considered for determining the speed. It has emerged that the chronologically first pictures of a video sequence are frequently blurry, since the user presses a button or touch-sensitive display of the mobile computer device in order to start recording. This movement is frequently reflected in the chronologically first video frames of the sequence being blurry. By not taking into consideration the chronologically first images, the accuracy of the measurement of the property of the trajectory of the ball is increased on the whole. The first seven images of the sequence of video frames are preferably not considered.

The method preferably further comprises the steps of: determining an angle of flight of the ball; and calculating a flight distance of the ball based on an angle of flight and a calculated speed of the ball. Due to this, it can also be displayed to the user how far the ball flew or would have flown, in addition to the speed. Flight distance can be calculated from the common ballistic trajectory of an object. The air resistance of the ball is preferably considered.

The method preferably comprises the step: determining an initial acceleration of the ball. This quantity is a measure for the force exerted by the player when kicking, batting or throwing the ball. For example, the initial acceleration may be the acceleration to which a soccer ball is subject when kicked by a player. The initial acceleration may be used for a comparison among players in a competition.

The sequence of video frames is preferably recorded essentially perpendicular to a trajectory of the ball. The trajectory is essentially at an angle of 90° to the recording direction of the camera of the mobile computer device, so that the property of the trajectory of the ball, e.g. its speed, is not calculated erroneously. At an angle of 90°, the trajectory of the ball has the smallest motion component towards the camera or from the camera. The position of the camera preferably deviates less than 10° from a right angle to the trajectory. The user is preferably made aware of the ideal position relative to the ball before the method is carried out.

In a preferred embodiment, the video frames are read into a video buffer for processing. A video buffer enables rapid access to the image data. The video buffer is preferably established in the internal memory of the mobile computer device. The internal memory can be accessed rapidly through the processor of the mobile computer device. Alternatively, it may be a dedicated video buffer in a video processor or graphic acceleration chip of the mobile computer device, for example.

The processed video frames are preferably also stored in a video buffer, as write access to a video buffer is also very fast.

The method is preferably provided with a fixed number of predetermined video buffers for processing the video frames. This saves the central memory or the dedicated video memory of the mobile computer device and accelerates the method, since it is not necessary for a further part of the memory to be reserved for each video frame to be newly processed. Four video buffers are preferably available to the method.

In a preferred embodiment, the method comprises the step of: superimposing a calculated trajectory of the ball on at least one video frame of the sequence of video frames and/or on a photo taken with the camera. In this manner, the trajectory can be displayed to the user. This can be a still image, for example, which shows a player when kicking and the trajectory of the ball. This still image is generated after calculating the trajectory.

The method preferably further comprises the step of: transmitting with the mobile computer device at least the determined property of the trajectory of the ball to a server. The transmission may occur wirelessly, e.g. by means of a transmitter or transceiver using radio technologies such as Bluetooth, BTLE (Bluetooth Low Energy), WLAN, GSM, UMTS, LTE, NFC or other wireless radio technologies, for example. The transmission may alternatively occur by wire, e.g. by means of a USB cable, micro USB cable, Firewire, Lightning cable, phone jack, etc. The transmission may occur in a manual way, for example by having the user press a key on the device or its touch-sensitive display. Alternatively, the transmission occurs automatically, e.g. after each shot, hit or throw or to predetermined points in time, e.g. each hour or in the evening.

The server can be the server of a social network, which allows the property of the trajectory of the ball, for example its speed, the launch angle or the flight distance, to be shared for the purpose of comparing with other players. Known social networks are e.g. Facebook ® and Twitter ®. The server may also be a "Cloud" database, e.g. "iCloud" by Apple or "Dropbox". A desktop PC or a laptop may also be used as a server for storing the sent data. The data may, for example, be transferred from the mobile computer device to a desktop PC or a laptop by means of the software "iTunes" by Apple.

A picture of the player when kicking, striking or throwing is preferably also uploaded to the server. The calculated property of the trajectory of the ball, e.g. its speed, is preferably shown in the picture. Additionally, further data may be sent to the server, such as, for example, the launch angle, the flight distance, a video of the shot, hit or throw, picture sequences or graphics, data of the player, such as his name, for example. It is further preferable that a ranking of players be stored on the server. The ranking could, for example, comprise the names or aliases of players and their best performances. The best performance could, for example, be the highest ball speed achieved, the highest acceleration or the longest shot, hit or throw. The ranking could be derived from the results of all registered users or relate merely to a group of users, e.g. a circle of friends. The ranking could comprise the date on which the best performance was achieved in addition to the best performances and the names of the users. In addition to the name, a picture of the user may be shown.

The ranking of the players may be specific to the sport. On a ranking specific to a sport for example, only properties of the trajectories may be shown, which were determined while playing soccer. In addition, or alternatively, the ranking may be specific to age. For example, in a ranking specific to age, only the properties of trajectories may be shown which have been determined by players between 20 and 25 years old. The ranking could be viewed by all players. Alternatively, the ranking could be viewed by just those players having signed in on a server. According to a further aspect of the present invention, a mobile computer device according to claim 12 is provided. A further aspect of the present invention refers to a mobile computer device which is configured to carry out a method described herein, according to the invention.

Yet a further aspect of the present invention relates to a computer program comprising instructions which cause a processor and a camera of a mobile computer device to carry out a method described herein, according to the invention.

In a preferred embodiment, the computer program is an app for a mobile computer device.

## 4. Brief description of the drawings

The presently preferred embodiments of the method according to the invention as well as of the mobile computer device according to the invention are described in the following detailed description, with reference to the following drawings:

**Fig. 1:** a schematic top view of a relative positioning of the mobile computer device and the ball for carrying out the method according to the invention;

**Fig. 2:** a flow chart of the method according to the invention;

**Fig. 3:** an example of a screen view when recording a sequence of video frames;

**Fig. 4:** an example of a screen view when the ball position is specified by the user;

**Fig. 5:** a further example of a screen view when the ball position is specified by the user;

**Fig. 6:** an example of a screen view when the calculated speed, flight distance and launch angle is displayed.

## 5. Detailed description of the preferred embodiments

The presently preferred embodiments of the present invention are described below with reference to a method for measuring a property of the trajectory of a ball with a mobile computer device.

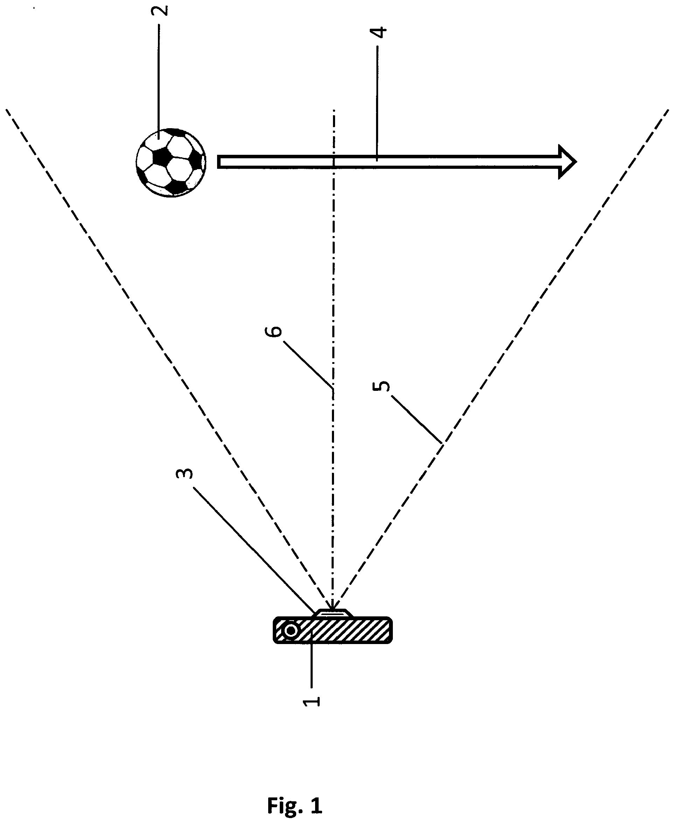

A schematic top view of a relative positioning of the mobile computer device **1** and the ball **2** as used for carrying out the method according to the invention is shown in **Fig. 1.** The mobile computer device **1** may, for example, be a smartphone, a tablet computer or a mobile media player. In the positioning shown in **Fig. 1,** the ball **2** and a part of its expected trajectory **4** are in the field of vision **5** of a camera **3** of the mobile computer device **1**. In order to be able to calculate the property of the trajectory **4** of the ball **2**, e.g. its speed, as accurately as possible by means of the method according to the invention, the central axis **6** of the field of vision **5** of the camera **3** should be essentially perpendicular to the expected trajectory **4** of the ball **2**. Deviations from a right angle are tolerable, however. Thus, the method according to the invention still provides sufficiently precise measurement values in the case of a deviation from the right angle of 10°, that is, between 80° and 100°.

Furthermore, it is advantageous if the mobile computer device **1** and the ball **2** are positioned with respect to one another such that the greatest possible share of the trajectory **4** of the ball **2** is within the field of vision **5** of the camera **3**. This ensures that at least two video frames of the video sequence to be recorded with the camera **3** show the ball **2** in motion for the evaluation and calculation of the property of the trajectory **4** of the ball **2**, e.g. its speed. As shown in **Fig. 1**, this can be achieved by the ball **2** being positioned at a certain distance from the central axis **6** of the field of vision **5** of the camera **3**. In other words, the ball **2** is rather positioned at the edge of the field of vision **5** covered by the camera, or the camera is turned correspondingly. A preferred distance of camera **3** and ball **2** is, for example, three meters. The method may, however, also be performed with different distances.

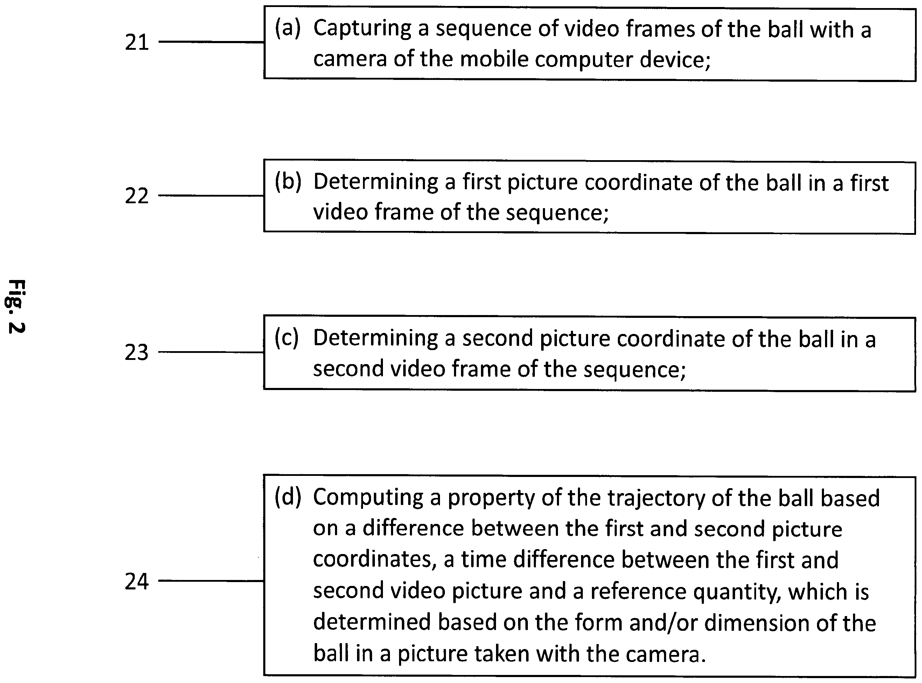

The process of the method according to the invention is shown in **Fig. 2**. In a first method step **21,** a sequence of video frames showing the ball **2** is recorded with a camera **3** of the mobile computer device **1**. In general, the cameras of mobile computer devices are suitable for recording and storing a sequence of video frames in the form of video films.

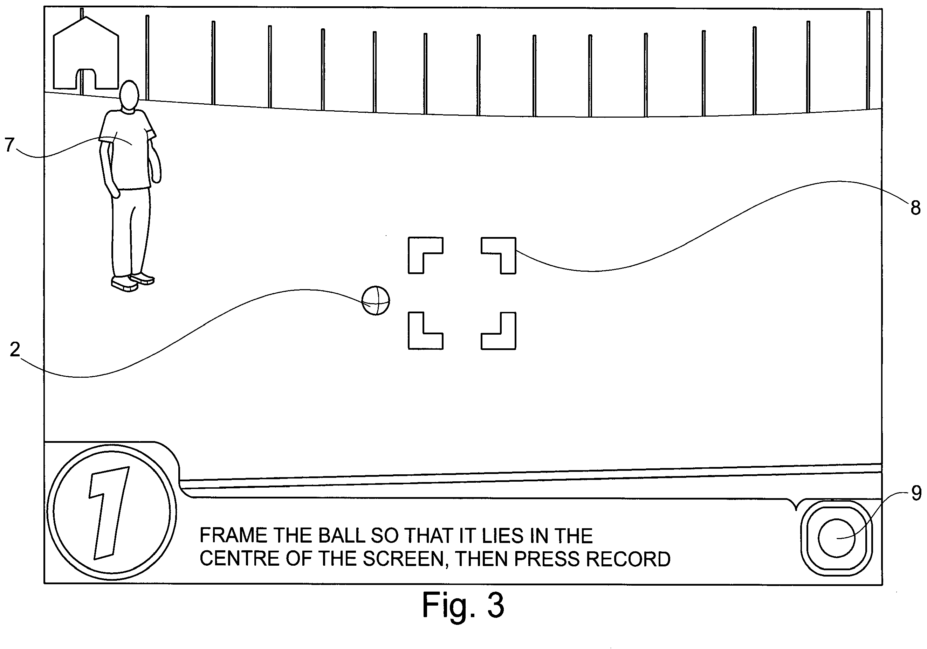

**Fig. 3** shows an example of a screen view as presented to the user of the mobile computer device **1** while the sequence of video frames is recorded. The ball **2** is shifted towards the left edge of the field of vision of the camera here, as described above with regard to **Fig. 1**. A displayed marking **8** helps the user of the mobile computer device **1** to find an ideal distance from the ball **2**. The ball should not be larger than the marking **8** on the screen view. Otherwise, the camera **3** of the mobile computer device **1** would be too close to the ball **2,** such that, in case of a hard shot, the ball **2** might fly out of the field of vision **5** of the camera **3** so fast that no video frame of the recorded sequence shows the ball **2** in motion and the desired property of the trajectory **4** of the ball **2,** e.g. its speed, cannot be calculated precisely.

A soccer player **7** who will subsequently shoot the ball **2** is also shown in **Fig. 3**. However, the method according to the invention is not limited to soccer, but can also be used in a plurality of types of ball games such as tennis, golf, basketball, table tennis, American football, etc.

A record button **9** on the touch-sensitive screen of the mobile computer device **1** is shown in **Fig. 3**. The user of the mobile computer device **1** first of all presses this record button, which starts the recording of a sequence of video frames with the camera **3** of the mobile computer device **1**. After pressing the record button **9**, the soccer player **7** shoots the ball **2** as perpendicularly as possible to the central axis **6** of the field of vision **5** of the camera **3,** as described above with reference to **Fig. 1**. Once the ball **2** has left the field of vision **5** of the camera **3**, the user of the mobile computer device **1** presses the record button **9** again in order to terminate the recording of the sequence of video frames.

Alternatively, the recording may be started by pressing the record button **9** and may be stopped after a defined period of time (e.g. **5** seconds) automatically. As a further alternative, the recording is started by pressing the record button **9** and the mobile computer device **1** detects that the ball **2** was shot and has left the field of view of the camera and automatically stops the recording.

Alternatively, the user may press the record button **9**, positions the mobile computer device **1** such that the camera **3** points to the ball **2,** goes to the ball, makes a defined sound (e.g. a whistle sound, clapping, shouting, etc.) whereby the recording is started. Then, the user shoots the ball **2** and again makes a defined sound (e.g. a whistle sound, clapping, shouting, etc.) whereby the recording is stopped.

As a further alternative, the user presses the record button **9**, positions the mobile computer device **1** such that the camera **3** points to the ball **2** and goes to the ball **2**. The mobile computer device **1** then causes a defined sound, by means of a speaker of the mobile computer device **1** (e.g. a whistle sound or an automatic message), essentially at the same time the recording starts. The user subsequently shoots the ball **2**. Optionally, the mobile computer device **1** causes a predefined sound (e.g. a whistle sound or an automatic message) essentially at the same time the recording stops. The mobile computer device **1** may stop the recording when it is determined that the ball **2** has left the field of vision **5** covered by the camera **3**.

During the entire recording, the user holds the mobile computer device **1** as still as possible, i.e. he particularly does not follow the flying or rolling ball **2** with the camera **3**. Essentially, it is important that the mobile computer device **1** is held still during the recording as the calculation of the property of the trajectory **4** of the ball **2** may otherwise be impaired. At the beginning of the recording, there may be a corresponding instruction shown to the user.

Once the sequence of video frames of the shot ball **2** has been recorded as described above, the picture coordinates of the ball **2** are determined in a next method step **22,** in a first video frame of the sequence, as shown in **Fig. 2**. For this purpose, the ball **2** first has to be recognized in the first video frame. This may be carried out with known pattern-recognition methods, such as edge-detection methods or an artificial neuronal net, for example.

Once the ball **2** has been recognized in the first video frame, its picture coordinates are determined. These picture coordinates can refer to the geometrical center of the ball **2** in the first video frame, for example. The center can be determined by means of a fit, for example, based on the method of the smallest squares, to the pixels of the edge of the ball **2** which are determined by means of an edge-detection method, for example. Other methods are conceivable. Thus, for example, the smallest square or rectangle into which the ball **2** in the video frame just fits can also be searched. The edges of this square or rectangle thus lie on the tangents of the ball **2** in the video frame. The picture coordinates can then refer to a corner of the square or rectangle, for example.

The picture coordinates may, for example, specify the coordinates of the center of the ball **2** in the horizontal direction (x coordinate) and the vertical direction (y coordinate) in pixels, calculated from the left upper corner of the video frame, for example.

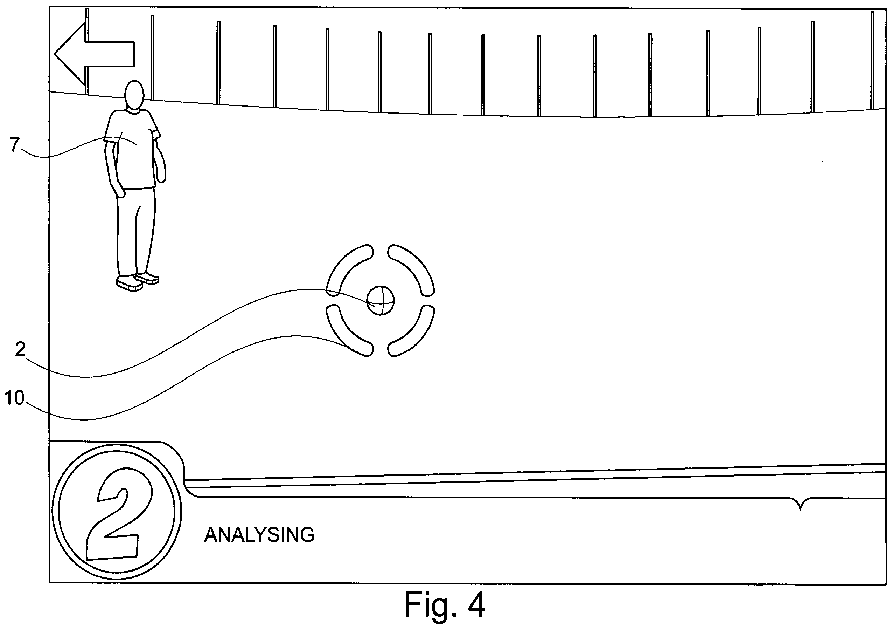

In order to facilitate the process of finding the ball **2** in the video frame, the user may be requested to indicate or tap on the ball in at least one video frame of the sequence. An example of a corresponding screen view is shown in **Fig. 4.** The user has tapped on the ball **2** here, thus specifying its approximate picture coordinates. The ball **2** is subsequently searched for in the video frame on the basis of the picture coordinates specified by the user. This allows the ball **2** to be found more rapidly, since it is not necessary to search the entire video frame for the ball **2.** Moreover, this prevents other round objects in the video frame being incorrectly recognized as the ball. After the ball **2** has been found on the basis of the picture coordinates specified by the user, optical feedback may be provided to the user. In the example of **Fig. 4**, this is a roundish marking **10** surrounding the ball **2.**

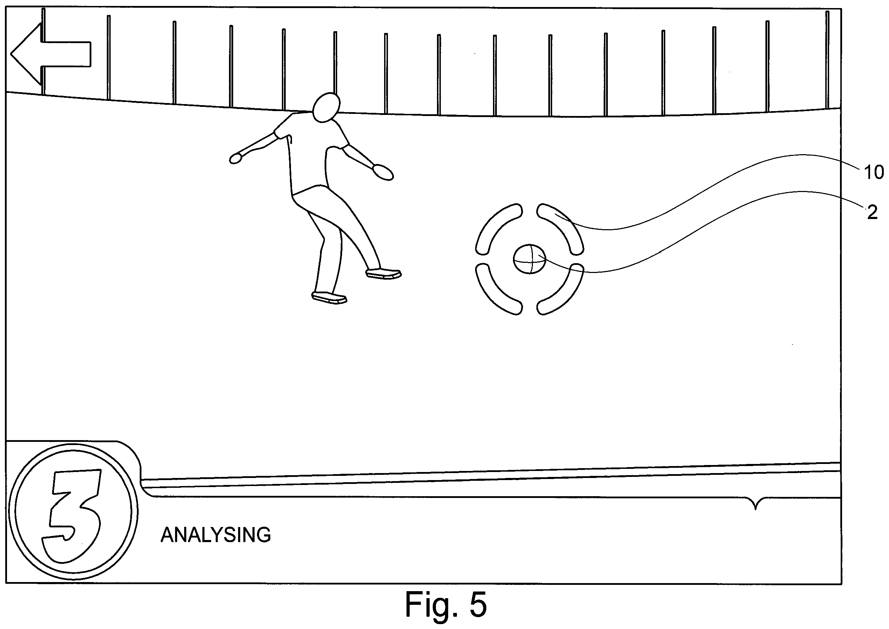

The specification of the user regarding the picture coordinates of the ball **2** does not necessarily have to be made with regard to the video frame which is used for calculating the speed of the ball **2**. When the user specifies the picture coordinates of the ball **2,** the ball **2** may be still, as shown in **Fig. 4**, for example, but it may also be in motion, as shown in **Fig. 5**, for example.

As described above, once picture coordinates of the shot ball **2** have been determined in a first video image, the picture coordinates of the ball **2** are determined in a next method step **23,** in a second video frame of the sequence, as shown in **Fig. 2**. With regard to finding the ball **2** in the second video frame and determining its picture coordinates, the statements made above with regard to method step 22 apply:

First, the ball **2** must be detected in the second video frame. This may be done with known pattern recognition methods, such as an edge detection method or an artificial neural network for example.

Once the ball **2** has been recognized in the second video frame, its picture coordinates are determined. These picture coordinates can refer to the geometrical center of the ball **2** in the second video frame, for example. Based on the method of the smallest squares, for example, the center can be determined by means of a fit with the pixels of the edge of the ball **2** which are determined by means of an edge-detection method, for example. Other methods are conceivable. Thus, for example, the smallest square or rectangle into which the ball **2** in the video frame just fits can also be searched. The edges of this square or rectangle thus lie on the tangents of the ball **2** in the video frame. The picture coordinates can then refer to a corner of the square or rectangle, for example.

The picture coordinates may, for example, specify the coordinates of the center of the ball **2** in the horizontal direction (x coordinate) and the vertical direction (y coordinate) in pixels, calculated from the left upper corner of the second video frame, for example.

In order to facilitate the process of finding the ball **2** in the second video frame as well, the user may be requested to indicate or tap on the ball **2** in at least one video frame of the sequence as has been explained with reference to **Fig. 4**. A corresponding example of a screen view is shown in **Flg. 5**. Here, the user has tapped on the ball **2** being in motion and has thus indicated its approximate picture coordinates. The ball **2** is subsequently searched for in the second video frame based on the picture coordinates as indicated by the user.

The ball **2** should be in motion, i.e. to have been kicked, hit or thrown already, in at least of the two video frames, so that a property of the trajectory **4** of the ball **2** can be calculated in the subsequent method step **24.** For example, the first video frame may be the last video frame of the sequence in which the ball **2** is still at rest, whereas the immediately subsequent second video frame shows the ball **2** in motion. Alternatively, the first video frame may also show the ball **2** in motion. For example, the first and the second picture may be selected from a partial sequence of video frames which show the ball **2** in motion, such as in flight.

The chronologically first video frame of such a partial sequence may be determined with a binary search algorithm, for example. With a binary search algorithm, it is first determined, for a video frame from the middle of the sequence, whether the ball **2** is in motion. If this is the case, a video frame from the middle of the first half of the sequence is selected and another determination made. If this is not the case, a video frame from the middle of the latter half of the sequence is selected and another determination made. In this manner, the beginning of the partial sequence is found in a maximum of $\lceil \log_2(n) \rceil$ steps, n being the number of video frames in the sequence and the function rounding $\lceil \cdot \rceil$ up to the next integer.

In the next method step **24** of the method according to the invention, a property of the trajectory **4** of the ball **2** is calculated based on the difference between the first and second picture coordinates, a time difference between the first and second video picture and a reference quantity, which is determined based on the form and/or dimension of the ball **2** in a picture taken with the camera **3**.

For example, the speed of the ball **2** could be calculated from the difference between the picture coordinates as described below.

The difference between the picture coordinates of the ball **2** in a first and a second video frame can be calculated as the difference between the x and y coordinates of the two video frames, for example. If the picture coordinates are $(x_1, y_1)$ in the first video frame and $(x_2, y_2)$ in the second video frame, for example, the difference between the picture coordinates is $(x_2-x_1, y_2-y_1)$. In order to obtain the absolute sum of the speed of the ball **2**, the distance s traveled between the first and the second video frame can be calculated from this vectorial difference in a known manner. $s = \sqrt{(x_2 - x_1)^2 + (y_2 - y_1)^2}$.

In addition to the traveled distance $s$, the time difference $t$ between the first and the second video frames is also taken into account for the speed to be calculated. This time difference can be determined from the frame rate provided by the camera **3** of the mobile computer device **1**. The time difference between two subsequent video frames emerges from the reciprocal of this frame rate. If the camera **3** provides 30 pictures per second, for example, the difference between two subsequent pictures amounts to 1/30 seconds, that is, approximately 33 milliseconds. If the first and second video frames are not immediately subsequent, this has to be taken into consideration accordingly. If there are another two video frames between the first and the second video frames, for example, the difference between the first and the second video frame amounts to 0.1 seconds, that is, 100 milliseconds, in the case of a frame rate of 30 pictures per second.

The speed could now be calculated in the known manner as the quotient of distance and time, that is, $s/t$. However, the distance s calculated from the difference between the picture coordinates of the ball **2** relates to the unit used for specifying the picture coordinates, that is, usually pixels. However, a specification of the speed in reality and not in the sequence of video frames is desired. Therefore, for calculating the speed, a reference quantity is used which places the distance or speed traveled in the sequence, in relation to the distance or the speed actually traveled in reality.

The reference quantity may specify, for example, that a pixel traveled by the ball **2** corresponds to one centimeter in reality. The reference quantity may also relate the speeds to one another and state, for example, that one pixel per second corresponds to one-hundredth of a meter per second.

The reference quantity is determined based on the form and/or dimension of the ball **2** in a picture taken with the camera **3**. For example, the diameter or circumference of the ball **2** is determined in a video frame of the sequence. This video frame may, for example, be a video frame as shown in **Fig. 4** and in which the ball is still, such that its circumference or diameter can be determined with particular precision. However, it does not have to be a picture from the video sequence. For example, a photo may be taken with the photo function of the camera **3**, which is used for determining the diameter or circumference of the ball **2**. Instead of the circumference or the diameter, it is also possible to determine the edge length of a square or rectangle in which the ball **2** just fits.

In a specific example, the diameter of the ball **2** is determined based on a picture with 50 pixels taken with the camera **3**. Since a soccer ball usually has a known diameter of 22 cm, it follows that the reference size will be 50/0.22 ($\cong$ 227.27) pixels per meter. The reference quantity may also be specified as a reciprocal, that is, 0.22/50 ($\cong$ 0.0044) meters per pixel. What is decisive is that the reference quantity relates a length in a video frame to a length in reality and that a reference quantity is determined on the basis of the shape and/or size of the ball **2**.

In the above example, the reference quantity was determined based on the known diameter of the ball **2**. The use of other known quantities is conceivable, such as the circumference or the length of an elliptic semi-axis, where it is not a spherical ball **2**, such as an American football, for example. It is also possible to determine the reference quantity by means of the shape of the ball, such as by means of the curvature of its surface. The shape and/or size of the ball **2** may also be the form and/or size of a pattern applied to the ball **2**.

The known diameter of the ball **2** (22 cm in the above example) may be stored in the mobile computer device **1**. The user could, for example, select for what sort of ball sport he wants to obtain the properties of the trajectory **4** of the ball **2**, e.g. the speed. Accordingly, he may be presented with a selection of different balls and/or the corresponding diameters from which he may choose. The diameter (and any further data) of the different balls could be stored in the mobile computer device **1**. Alternatively, the diameter and further data may be stored on a server and may be downloaded to the mobile computer device **1** when needed.

Continuing the above example, the distance traveled by the ball **2** between the first and the second video frames amounts to 100 pixels, for example. With the above reference quantity, this corresponds to a distance of 100·0.0044 = 0.44 meters traveled. If the frame rate amounts to 30 pictures per second, for example, and if the first and the second video frames are immediately follow one another, the time difference between the two video frames amounts to 1/30 ($\cong$ 0.033) seconds. The speed of the ball **2** in reality is therefore calculated as 0.44/(1/30) = 30·0.44 =13.2 meters per second. This corresponds to a speed of the ball **2** of 47.52 kilometers per hour.

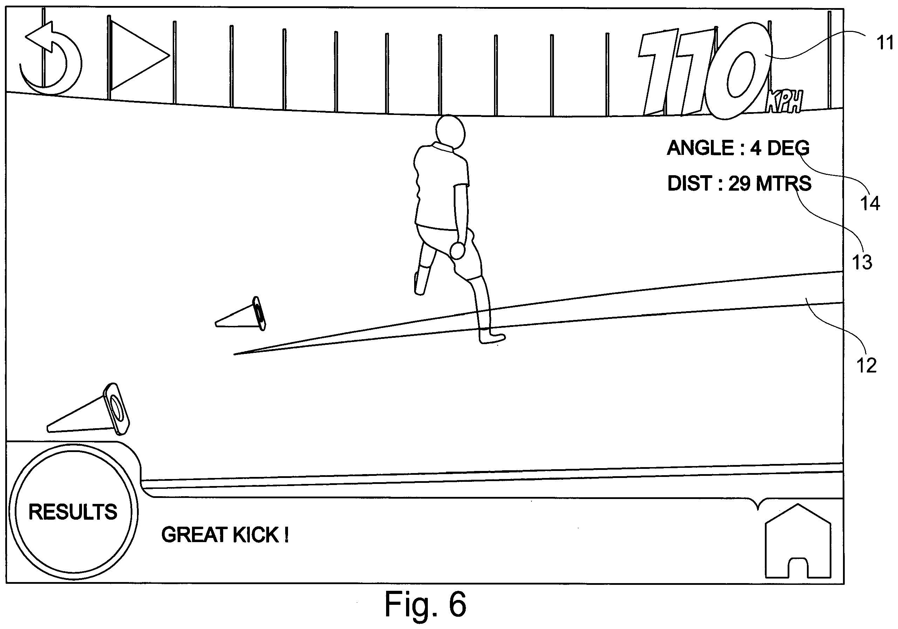

It is shown by way of example in **Fig. 6** how the result of the method according to the invention is displayed to the user. In the example, the resulting speed shown to the user (reference sign **11**) is 110 kilometers per hour ("KPH"). Furthermore, in **Fig. 6**, a calculated trajectory **12** of the ball **2** is superimposed on the shown video frame from the sequence of video frames. This calculated trajectory **12** can be calculated from the sequence of video frames by the picture coordinates of the ball **2** being determined in each video frame which shows the ball **2** in motion and a trajectory being interpolated from that, for example. Alternatively, the trajectory **12** can also be calculated from a few video frames and extrapolated from the calculated speed and/or a determined angle of flight, for example. The trajectory **12** may furthermore be superimposed on a photo taken with camera **3** instead of on a video frame.

In addition, in the example of **Fig. 6**, the determined flight distance **13** of 29 meters and the determined launch angle **14** of four degrees is shown to the user.

In the examples of screen views of Figures 3 to 6, symbols are shown in the top left corner which the user may tap or click for certain functions. In the top left corner of **Fig. 3** and in the bottom right corner of **Fig. 6,** a symbol in the shape of a house is shown. By tapping or clicking this symbol, the user may switch back to a main menu. In Figures 4 and 5, a symbol in the shape of a horizontal arrow is shown in the top left corner. By tapping or clicking on this symbol, the user returns one step. In **Fig. 6,** a symbol in the shape of a circular arrow is shown in the top left corner. By tapping or clicking on this symbol, the user can repeat a recording with the camera **3** of the mobile computer device **1,** for example if the previous recording was not good. A triangular symbol is shown adjacent to this symbol. By tapping or clicking on this triangular symbol, the user can play back a previously recorded video.

The symbols shown in Figures 3 to 6 may essentially also be shown at different locations on the screen and do not have to have the shapes shown. Furthermore, it is conceivable that text be shown instead of symbols.

The calculated speed of the ball **2** or other properties of the trajectory **4** may be transmitted from the mobile computer device **1** to a server on the Internet. For example, the speed may be shared with other users in a social network such as Twitter ® or Facebook ®. It is also conceivable that a ranking of players with their respective highest speeds or best flight distances, etc. be held and published on the server. It is also conceivable that the speed or flight distance, etc. be stored in the personal training history of each player in order to document improvements in performance. It is also conceivable that at least the determined property of the trajectory **4** of the ball **2** or several properties of the trajectory **4** are stored on a team site, app site or website.

Multiplayer games may be performed with the method according to the invention, where several players compete against each other. Such a game may be performed with a single mobile computer device **1.** To this end, an app, for example, is started on the mobile computer device **1** and a game with three players, for example, is selected. Each player then performs the method according to the invention and plays against each of the other players, i.e. compares his results directly with at least another player. A player loses and must quit the game if he has a lower performance, e.g. a lower speed or a lower flight distance than the other player against whom he directly competes. The player who stays in the game until the end, i.e. who has won all direct comparisons, wins the game. Alternatively, the players do not compete directly against each other, but rather each player plays three rounds, for example, the results of which are added up. The player with the highest score (e.g. flight distances or speeds) wins.

A multiplayer game may also be played online. In such a scenario, players directly compete via the Internet, i.e. they may be in physically different locations. The players may use an app, for example, which is connected to the Internet, a social internet site (e.g. "Facebook") or a special web page. Each player may then enter a game ("Battle") online and the results achieved are compared online.

In addition or alternatively, the players may also be temporally separated, i.e. each player may play at different times. For example, a multiplayer game could be started at a certain point in time and may run for defined period of time. At the end of the period, a winner is determined. Thus, players have the opportunity to improve their results over several trials to attempt to finally win the game.

It is possible that the probable range of the kick, i.e. the place where the ball **2** hits the floor, is calculated from the calculated speed and an angle of flight determined from the video frames of the sequence. For this purpose, known ballistic equations may be used, which either take the air resistance of the ball **2** into consideration or dispense with such considerations in favor of a simpler calculation. Disregarding air resistance results in a range R of $R = \frac{v^2}{g}\sin(2\beta)$, with $\upsilon$ being the calculated speed of the ball **2**, g being gravitational acceleration (approximately 9.81 m/s², depending on the location on earth) and $\beta$ being the angle of flight. For lower speeds, as is usually the case with ball sports, this equation constitutes an adequate approximation of the range of the kick.

The method can be optimized for the purpose of being carried out on a mobile computer device **1** by various measures. One such measure, for example, is extrapolating the picture coordinates of the ball **2** in a video frame of the sequence. For example, the position of the ball **2** can be extrapolated on the basis of the last video frame which shows the ball **2** at rest and at least one subsequent video frame in which the ball **2** is in motion in subsequent video frames. On the basis of the extrapolated picture coordinates, it is then possible to determine the actual position of the ball **2**. This avoids having to search the entire video frame for the ball **2**, and thus saving calculation time. Moreover, in this manner, it can simply be estimated when the ball **2** will leave the edge of the screen and as of which video frame of the sequence it will no longer be visible. It is then no longer necessary to search for the ball in these pictures at all.

The picture coordinate may be extrapolated by the picture coordinate of the ball **2** being determined in two different, e.g. directly subsequent, pictures and it being estimated, from the difference between the picture coordinates, how far the ball **2** has moved in each subsequent video frame.

Another measure which increases precision of the calculated property of the trajectory **4** of the ball **2**, e.g. its speed, involves not taking into account the chronologically first video frames of the recorded sequence. It has been found that users of a mobile computer device **1** unwittingly blur the beginning of the recording when pressing the record button **9.**

Thus, the first seven video frames in the sequence may be blurry, for example. In order to prevent imprecisions, e.g. when determining the reference quantity if it is gathered from a video frame showing the ball **2** at rest, these chronologically first video frames are not taken into consideration.

Another possibility for avoiding blur is to automatically start the recording as described above, i.e. with a delay or by sounds. In addition, or alternatively, the user may position the mobile computer device **1** on a fixed base.

Instead of carrying out calculations, so-called lookup tables may be used. These contain, for example, the function values of a function depending on their argument or arguments. For example, the method described above for calculating the flight distance from a ballistic equation may be performed by means of a lookup table in which the flight distance depending on the initial speed and the launch angle is stored. A search is then performed in the table for the determined initial speed and the determined launch angle, and the value at the corresponding entry in the table is returned.

Another possibility of optimizing the method for the purpose of being carried out on a mobile computer device **1** involves reading the video frames to be processed into a video buffer. It is possible, for example, for a memory section in the internal memory of the mobile computer device **1** to be reserved as the video buffer and for the video frames to be processed to be read into this video buffer and processed sequentially. After one video frame has been processed, the next video frame is read in, which causes the previous video frame to be overwritten. Processing may, for example, consist in searching for the ball **2** in the video frame and determining the reference quantity gathered from this. If a processed video frame, e.g. the result of an edge recognition, is required again in the subsequent step, the processed video frame may be stored in a second video buffer.

Instead of an area in the internal memory, it is also possible to use a video buffer in a dedicated component, for example in a video processor or a graphics acceleration chip. A fixed number of video buffers, e.g. four, may be allocated to the method for processing the video frames, in order to limit the memory required by the method, which is limited on a mobile computer device anyway.

For determining object parameters, e.g. edge or ball parameters, the so-called Hough transformation may be used. This involves transforming a picture into a so-called dual space, which is the space of all possible parameter values of the object to be detected. With edge detection, the dual space is two-dimensional, for example. The first dimension is generally represented by the distance of the edge, which is idealized by a line, to the origin, whilst the second dimension is represented by the angle of the line to the x-axis, for example. The Hough transformation from the original picture into the dual space results in accumulation points corresponding to the parameters of the lines or edges in the original picture. By finding the accumulation points in the dual space, the parameters of the lines or edges in the original picture may be determined.

The Hough transformation may be preceded by a so-called edge detection, e.g. by means of a convolution operation such as a Canny or Sobel filter, which emphasizes the edges in a picture. The Hough transformation then provides the parameters of these emphasized edges.

The method according to the invention may be implemented directly in the hardware of a mobile computer device **1.** The method may also be implemented by a computer program which comprises instructions which cause a processor of the mobile computer device **1** to carry out the method according to the invention described herein when the instructions are executed on the processor. The computer program may be firmly integrated in the operating system of the mobile computer device **1** or it may be subsequently installed by the user when it is transmitted to the mobile computer device **1** via a USB cable, wireless via WLAN or via a mobile-radio connection, for example. The computer program may also be an app offered on relevant market places on the Internet (e.g. "iTunes" ® by Apple and "Google Play" ® by Google).

**Claims**

1. Method for determining a property of a trajectory of a ball with a mobile computer device, comprising the steps:

    (a) Capturing (21) a sequence of video frames of the ball with a camera of the mobile computer device, wherein the central axis of the field of vision of the camera is at an angle of 80° to 100° to the expected trajectory of the ball;
    (b) Determining (22) by the mobile computer device a first picture coordinate of the ball in a first video frame of the sequence;
    (c) Determining (23) by the mobile computer device a second picture coordinate of the ball in a second video frame of the sequence;
    (d) Computing (24) a property of the trajectory of the ball based on a difference between the first and second picture coordinates, a time difference between the first and second video picture and a reference quantity, which is determined based on the form and/or dimension of the ball in a separate photo taken with the camera, wherein the photo has a higher resolution than the first and second video frames, wherein the method further comprises the steps of:

        (e) Obtaining an indication of a user relating to the position of the ball in a video frame of the sequence of video frames;
        (f) Using the indication to determine by the mobile computer device the position of the ball in the video frame.

2. Method according to claim 1, wherein the mobile computer device is a smartphone, tablet computer or mobile media player.

3. Method according to one of the preceding claims, wherein the at least one property of the trajectory of the ball is speed, acceleration, an angle or a flight distance.

4. Method according to one of the preceding claims, wherein the steps (b), (c) and (d) are performed for a plurality of video frames of the sequence of video frames.

5. Method according to one of the preceding claims, wherein the reference quantity is determined based on a known form and/or dimension of the ball.

6. Method according to one of the preceding claims, wherein the form and/or dimension of the ball is a diameter, radius, circumference, an arc length, a distance or a curvature of the ball itself or a pattern thereon.

7. Method according to one of the preceding claims, further comprising the step:

    Extrapolating the picture coordinates of the ball in at least one video frame of the sequence of video frames.

8. Method according to claim 7, further comprising the step:

    Determining the first and second picture coordinates of the ball in the first and the second video frame of the sequence in the steps (b) and (c) based on the extrapolated picture coordinates.

9. Method according to one of the preceding claims, wherein a predetermined number of temporal first video frames of the sequence of video frames are not considered for determining the speed.

10. Method according to one of the preceding claims, further comprising the step:

    Sending with the mobile computer device at least the determined property of the trajectory of the ball to a server.

11. Method according to one of the preceding claims, wherein the first and second video frames are immediately consecutive video frames of the sequence of video frames.

12. Mobile computer device (1), comprising:

    (a) A camera (3), which is configured for recording a sequence of video frames of a ball, wherein the central axis of the field of vision (5) of the camera (3) is at an angle of 80° to 100° to the expected trajectory of the ball;
    (b) A processor, which is configured for:

        (1) Determining a first picture coordinate of the ball in a first video frame of the sequence;
        (2) Determining a second picture coordinate of the ball in a second video frame of the sequence;
        (3) Computing a property of the trajectory of the ball based on a difference of the first and second picture coordinates, a time difference between the first and second video picture and a reference quantity, which is determined based on the form and/or dimension of the ball in a separate photo taken with the camera, wherein the photo has a higher resolution than the first and second video frames;
        (4) Obtaining an indication of a user relating to the position of the ball in a video frame of the sequence of video frames;

(5) Using the indication to determine the position of the ball in the video frame.

13. Mobile computer device (1) according to claim 12, which is further configured to perform a method of one of claims 2 to 11.

14. Computer program comprising instructions which cause a processor and a camera of a mobile computer device to perform a method according to one of claims 1 to 11.

**Patentansprüche**

1. Verfahren zum Ermitteln einer Eigenschaft einer Flugbahn eines Balls mit einem mobilen Computergerät, aufweisend die Schritte:

(a) Aufnehmen (21) einer Sequenz von Videobildern des Balls mit einer Kamera des mobilen Computergeräts, wobei die Mittelachse des Blickfelds der Kamera in einem Winkel von 80° bis 100° zur erwarteten Flugbahn des Balls ist;
(b) Ermitteln (22) durch das mobile Computergerät einer ersten Bildkoordinate des Balls in einem ersten Videobild der Sequenz;
(c) Ermitteln (23) durch das mobile Computergerät einer zweiten Bildkoordinate des Balls in einem zweiten Videobild der Sequenz;
(d) Berechnen (24) einer Eigenschaft der Flugbahn des Balls basierend auf einem Unterschied zwischen der ersten und zweiten Bildkoordinate, eines Zeitabstands zwischen dem ersten und zweiten Videobild und einer Referenzgröße, die basierend auf der Form und / oder Größe des Balls in einem separaten Foto, welches mit der Kamera aufgenommen wurde, ermittelt wird, wobei das Foto eine höhere Auflösung hat als die ersten und zweiten Videobilder, wobei das Verfahren weiter die Schritte aufweist:

(e) Erhalten einer Angabe eines Benutzers, welche sich auf die Position des Balls in einem Videobild der Sequenz von Videobildern bezieht; und
(f) Verwenden der Angabe zum Ermitteln der Position des Balls in dem Videobild durch das mobile Computergerät.

2. Verfahren nach Anspruch 1, wobei es sich bei dem mobilen Computergerät um ein Smartphone, einen Tabletcomputer oder einen mobilen Medienplayer handelt.

3. Verfahren nach einem der vorhergehenden Ansprüche, wobei es sich bei der zumindest einen Eigenschaft der Flugbahn des Balls um eine Geschwindigkeit, eine Beschleunigung, einen Winkel, oder eine Flugweite handelt.

4. Verfahren nach einem der vorhergehenden Ansprüche, wobei die Schritte (b), (c) und (d) für eine Mehrzahl von Videobildern aus der Sequenz von Videobildern durchgeführt werden.

5. Verfahren nach einem der vorhergehenden Ansprüche, wobei die Referenzgröße basierend auf einer bekannten Form und / oder Größe des Balls ermittelt wird.

6. Verfahren nach einem der vorhergehenden Ansprüche, wobei es sich bei der Form und / oder Größe des Balls um einen Durchmesser, Radius, Umfang, eine Bogenlänge, einen Abstand oder eine Krümmung des Balls selbst oder eines Musters darauf handelt.

7. Verfahren nach einem der vorhergehenden Ansprüche, weiter aufweisend den Schritt:

Extrapolieren der Bildkoordinaten des Balls in zumindest einem Videobild der Sequenz von Videobildern.

8. Verfahren nach Anspruch 7, weiter aufweisend den Schritt:

Ermitteln der ersten und zweiten Bildkoordinaten des Balls in dem ersten und dem zweiten Videobild der Sequenz in den Schritten (b) und (c) basierend auf den extrapolierten Bildkoordinaten.

9. Verfahren nach einem der vorhergehenden Ansprüche, wobei eine vorbestimmte Anzahl von zeitlich ersten Videobildern der Sequenz von Videobildern zur Ermittlung der Geschwindigkeit nicht berücksichtigt wird.

10. Verfahren nach einem der vorhergehenden Ansprüche, weiter aufweisend den Schritt:

Senden mit dem mobilen Computergerät zumindest der ermittelten Eigenschaft der Flugbahn des Balls an einen Server.

11. Verfahren nach einem der vorhergehenden Ansprüche, wobei das erste und zweite Videobild unmittelbar aufeinander folgende Videobilder der Sequenz von Videobildern sind.

12. Mobiles Computergerät (1), aufweisend:

(a) eine Kamera (3), welche zum Aufnehmen einer Sequenz von Videobildern eines Balls konfiguriert ist, wobei die Mittelachse des Blickfelds (5) der Kamera (3) in einem Winkel von 80° bis 100° zur erwarteten Flugbahn des Balls ist;

(b) einen Prozessor, welcher konfiguriert ist zum:

(1) Ermitteln einer ersten Bildkoordinate des Balls in einem ersten Videobild der Sequenz;

(2) Ermitteln einer zweiten Bildkoordinate des Balls in einem zweiten Videobild der Sequenz;

(3) Berechnen einer Eigenschaft der Flugbahn des Balls basierend auf einem Unterschied der ersten und zweiten Bildkoordinaten, eines Zeitabstands zwischen dem ersten und zweiten Videobild und einer Referenzgröße, die basierend auf der Form und / oder Größe des Balls in einem separaten Foto, welches mit der Kamera aufgenommen wurde, ermittelt wird, wobei das Foto eine höhere Auflösung hat als die ersten und zweiten Videobilder

(4) Erhalten einer Angabe eines Benutzers, welche sich auf die Position des Balls in einem Videobild der Sequenz von Videobildern bezieht; und

(5) Verwenden der Angabe zum Ermitteln der Position des Balls in dem Videobild.

13. Mobiles Computergerät (1) nach Anspruch 12, welches ferner konfiguriert ist, ein Verfahren gemäß einem der Ansprüche 2 bis 11 durchzuführen.

14. Computerprogramm, welches Anweisungen aufweist, welche einen Prozessor und eine Kamera eines mobilen Computergeräts veranlassen, ein Verfahren nach einem der Ansprüche 1 bis 11 durchzuführen.

**Revendications**

1. Procédé de détermination d'une propriété d'une trajectoire d'un ballon au moyen d'un dispositif informatique mobile, comprenant les étapes de :

(a) capture (21) d'une séquence de trames vidéo du ballon avec une caméra du dispositif informatique mobile, l'axe central du champ de vision de la caméra formant un angle de 80° à 100° par rapport à la trajectoire attendue du ballon ;

(b) détermination (22) par le dispositif informatique portable d'une première coordonnée d'image du ballon dans une première trame vidéo de la séquence ;

(c) détermination (23) par le dispositif informatique mobile d'une seconde coordonnée d'image du ballon dans une seconde trame vidéo de la séquence ;

(d) calcul (24) d'une propriété de la trajectoire du ballon en fonction d'une différence entre la première et la seconde coordonnée d'image, d'une différence temporelle entre la première et la seconde image vidéo et d'une quantité de référence, qui est déterminée en fonction de la forme et/ou de la dimension du ballon dans une photo distincte prise avec la caméra, la photo étant d'une résolution supérieure à celle de la première et de la seconde trame vidéo, le procédé comprenant en outre les étapes de :

(e) obtention d'une indication d'un utilisateur par rapport à la position du ballon dans une trame vidéo de la séquence de trames vidéo ;

(f) utilisation de l'indication pour déterminer par le dispositif informatique mobile la position du ballon dans la trame vidéo.

2. Procédé selon la revendication 1, dans lequel le dispositif informatique mobile est un smartphone, une tablette informatique ou un lecteur de média mobile.

3. Procédé selon l'une des revendications précédentes, dans lequel la au moins une propriété de la trajectoire du ballon est la vitesse, l'accélération, un angle ou une distance de vol.

4. Procédé selon l'une des revendications précédentes, dans lequel les étapes (b), (c) et (d) sont exécutées pour une pluralité de trames vidéo de la séquence de trames vidéo.

5. Procédé selon l'une des revendications précédentes, dans lequel la quantité de référence est déterminée en fonction d'une dimension et/ou d'une forme connue du ballon.

6. Procédé selon l'une des revendications précédentes, dans lequel la dimension et/ou la forme du ballon est un diamètre, un rayon, une circonférence, une longueur d'arc, une distance ou une courbure du ballon proprement dit ou d'un motif sur celui-ci.

7. Procédé selon l'une des revendications précédentes, comprenant en outre l'étape de:

extrapolation des coordonnées d'images du ballon dans au moins une trame vidéo de la séquence de trames vidéo.

8. Procédé selon la revendication 7, comprenant en outre l'étape de :

> détermination de la première et de la seconde coordonnée d'image du ballon dans la première et la seconde trame vidéo de la séquence aux étapes b) et c) en fonction des coordonnées d'images extrapolées.

**9.** Procédé selon l'une des revendications précédentes, dans lequel un nombre prédéterminé de premières trames vidéo temporelles de la séquence de trames vidéo ne sont pas prises en considération pour la détermination de la vitesse.

**10.** Procédé selon l'une des revendications précédentes, comprenant en outre l'étape de:

> envoi avec le dispositif informatique mobile d'au moins la propriété déterminée de la trajectoire du ballon à un serveur.

**11.** Procédé selon l'une des revendications précédentes, dans lequel la première et la seconde trame vidéo sont des trames vidéo immédiatement consécutives de la séquence de trames vidéo.

**12.** Dispositif informatique mobile (1) comprenant :

> (a) une caméra (3) qui est configurée pour enregistrer une séquence de trames vidéo d'un ballon, l'axe central du champ de vision (5) de la caméra (3) faisant un angle de 80° à 100° par rapport à la trajectoire attendue du ballon ;
> (b) un processeur, qui est configuré pour :
>
> > (1) la détermination d'une première coordonnée d'image du ballon dans une première trame vidéo de la séquence ;
> > (2) la détermination d'une seconde coordonnée d'image du ballon dans une seconde trame vidéo de la séquence ;
> > (3) le calcul d'une propriété de la trajectoire du ballon en fonction d'une différence entre la première et la seconde coordonnée d'image, d'une différence temporelle entre la première et la seconde image vidéo et d'une quantité de référence, qui est déterminée en fonction de la forme et/ou de la dimension du ballon dans une photo distincte prise avec la caméra, la photo étant d'une résolution supérieure à celle de la première et de la seconde trame vidéo ;
> > (4) l'obtention d'une indication d'un utilisateur par rapport à la position du ballon dans une trame vidéo de la séquence de trames vidéo ;
> > (5) l'utilisation de l'indication pour déterminer par le dispositif informatique mobile la position du ballon dans la trame vidéo.

**13.** Dispositif informatique mobile (1) selon la revendication 12, qui est en outre configuré pour mettre en oeuvre un procédé selon l'une des revendications 2 à 11.

**14.** Programme informatique comprenant des instructions qui font en sorte qu'un processeur et une caméra d'un dispositif informatique mobile mettent en oeuvre un procédé selon l'une des revendications 1 à 11.

**Fig. 1**

(a) Capturing a sequence of video frames of the ball with a camera of the mobile computer device;

(b) Determining a first picture coordinate of the ball in a first video frame of the sequence;

(c) Determining a second picture coordinate of the ball in a second video frame of the sequence;

(d) Computing a property of the trajectory of the ball based on a difference between the first and second picture coordinates, a time difference between the first and second video picture and a reference quantity, which is determined based on the form and/or dimension of the ball in a picture taken with the camera.

21

22

23

24

**Fig. 2**

FRAME THE BALL SO THAT IT LIES IN THE
CENTRE OF THE SCREEN, THEN PRESS RECORD

Fig. 3

Fig. 4

Fig. 5

EP 2 800 057 B1

Fig. 6